# EUROPÄISCHE PATENTANMELDUNG

(11) **EP 2 259 208 A2**
(43) Veröffentlichungstag der Anmeldung: **08.12.2010**
(21) Anmeldenummer: 10164061.3
(22) Anmeldetag: 27.05.2010
(51) Int. Cl.: G06K 9/46

(54) **Verfahren zur Ermittlung von Orientierungsfeldern der papillaren Linien eines Fingerabdruckbildes.**

(30) Priorität: 03.06.2009 AT 3402009
(71) Anmelder: Siemens AG Österreich, 1210 Wien (AT)
(72) Erfinder: Birchbauer, Josef Alois, 8054, Seiersberg (AT); Bischof, Horst, 8063, Eggersdorf (AT); Ram, Surinder, 5020, Salzburg (AT)
(74) Vertreter: Maier, Daniel Oliver

(57) **Zusammenfassung**

Die Erfindung betrifft ein Verfahren zur Ermittlung von Orientierungsfeldern der papillaren Linien eines Fingerabdruckbildes mit folgenden Schritten:
in einer Lernphase wird aus einem Satz hochwertiger Fingerabdruckbilder,
- jeweils das lokale Orientierungsfeld der papillaren Linien bestimmt,
- zu jedem Orientierungsfeld eine parametrische Beschreibung erstellt,
- ein Parameter Sub-Raum ermittelt, der nur gültige Orientierungsfelder enthält,

in einer oder mehreren Bestimmungsphasen wird danach aus dem zu bestimmenden Fingerabdruckbild
- jeweils das lokale Orientierungsfeld der papillaren Linien bestimmt,
- zu jedem Orientierungsfeld eine parametrische Beschreibung erstellt,
- die Übereinstimmung der parametrischen Beschreibung mit dem Parameter Sub-Raum überprüft und gegebenenfalls eine Übereinstimmung durch Abwandlung von Parametern herbeigeführt,
- aus den an den Sub-Raum angepassten Parametern ein realistisches Orientierungsfeld erzeugt.

## Beschreibung

Verfahren zur Ermittlung von Orientierungsfeldern der papillaren Linien eines Fingerabdruckbildes.

Für die Extraktion von Merkmalen (Minutien, Mustertyp) aus Fingerabdrücken benötigt man die lokale Richtung der papillaren Linien. In qualitativ schlechten Bildregionen kann keine besondere Ausprägung dieser papillaren Linien festgestellt werden. Aus "Lin Hong, Yifei Wan, and Anil Jain. Fingerprint image enhancement: Algorithm and performance evaluation. IEEE Trans. Pattern Anal. Mach. Intell., 20(8):777-789, 1998" und "Joachim Vveickert. Coherenceenhancing diffussion filtering. Int. J. Comput. Vision, 31(2-3):111-127, 1999" ist es jedoch bekannt, dass unter Verwendung einer frequenz- und richtungsselektiven Filterung noch viele Details des Fingerabdruckes rekonstruiert werden können. Allerdings setzt diese Filterung voraus, dass man die Richtung der papillaren Linien kennt.

Verfahren zur Ermittlung des Orientierungsfeldes der papillaren Linien sind beispielsweise aus "J. Li, W.Y. Yau, and H. Wang. Constrained nonlinear models of fingerprint orientations with prediction. PR, 39(1):102- 114, January 2006." aus "Y. Wang, J. Ru, and D. Phillips. A fingerprint orientation model based on 2d fourier expansion (fomfe) and its application to singular-point detection and fingerprint indexing. PA MI, 29(4):573-585, April 2007." Oder auch aus "J. Zhou and J. Gu. Modeling orientation fields of fingerprints with rational complex functions. PR, 37(2):389∼391, February 2004." bekannt.

Die bekannten Verfahren haben den Nachteil, dass sie über keinerlei Lernfähigkeit verfügen und somit falsche Orientierungsfelder generieren können.

Der Erfindung liegt die Aufgabe zugrunde, diese Verfahren weiterzuentwickeln.

Erfindungsgemäß geschieht dies mit einem Verfahren nach Anspruch 1.
Vorteilhafte Ausgestaltungen der Erfindung ergeben sich aus den Unteransprüchen.

Das erfindungsgemäße Verfahren beruht auf einer parametrischen Darstellung von Orientierungsfeldern. Dazu wird in einem ersten Schritt der Parameter-Raum mittels einer ausreichend großen Anzahl von Fingerabdrücken gelernt. Dieses Lernen schränkt den Parameter-Raum auf einen Sub-Raum in dem sich nur gültige (biologisch plausible) Orientierungsfelder befinden ein. Im Anwendungsfall wird das Orientierungsfeld ebenfalls parametrisch modelliert aber die Parameter in den zuvor gelernten Sub-Raum erzwungen. Dies ermöglicht die realistische Bestimmung des Orientierungsfeldes für Regionen mit unzureichender Bildqualität.

Weitere Vorteile des Modells sind eine höhere Kompression des Orientierungsfeldes durch die parametrische Darstellung sowie eine potentiell bessere Klassifikation der Mustertypen.

Die Erfindung wird anhand eines Ausführungsbeispieles näher erläutert.

Das Ausführungsbeipiel betrifft den Ablauf eines Fingerprinterkennungsvorganges.

Dieser Erkennungsvorgang erfolgt auf der Basis eines den Fingerabdruck charakterisierenden Orientierungsfeldes seiner papillaren Linien.

Dazu wird in einem ersten Schritt ein lokales Orientierungsfeld der papillaren Linien des Fingerabdruckes bestimmt. Diese Bestimmung kann mittels bekannter Methoden - Gradientenfilter, Fourieranalyse -erfolgen, wie sie beispielsweise in "Anil K. Jain and David Maltoni. Handbook 0/ Fingerprint Recognition. Springer-Verlag New York, Inc., Secaucus, NJ, USA,2003." beschrieben sind.

Daraufhin erfolgt eine parametrische Beschreibung des Orientierungsfeldes, wie sie beispielsweise aus "J. Li, W.Y. Yau, and H. Wang. Constrained nonlinear models of fingerprint orientations with prediction. PR, 39(1):102- 114, January 2006." aus "Y. Wang, J. Ru, and D. Phillips. A fingerprint orientation model based on 2d fourier expansion (fomfe) and its application to singular-point detection and fingerprint indexing. PA MI, 29(4):573-585, April 2007." Oder auch aus "J. Zhou and J. Gu. Modeling orientation fields of fingerprints with rational complex functions. PR, 37(2):389∼391, February 2004" bekannt ist.

Diese parametrische Beschreibung entspricht einer Transformation , die in beide Richtungen erfolgen kann: das gegebene Orientierungsfeld kann einerseits in Parameterwerte übergeführt werden, umgekehrt kann aus den Parametern auch wieder das Orientierungsfeld rekonstruiert werden.

Liegt ein Fingerabdruck mit schlechter Bildqualität vor, können die bekannten Verfahren nur dazu verwendet werden, in kleinen Bildregionen das Orientierungsfeld zu interpolieren. Für größere Bildregionen versagen diese Methoden in der Regel jedoch, ggf. kann auch das Orientierungsfeld von guten Regionen beschädigt werden.

Erfindungsgemäß wird in einer dem Erkennungsvorgan vorgelagerten Lernphase ein Parameter Sub-Raum ermittelt, der nur aus der Praxis bekannte Orientierungsfelder enthält.

Dazu wird in dieser Lernphase ein Datensatz mit einer großen Anzahl von qualitativ hochwertigen und vollständigen Fingerabdrücken verwendet.

Alle in diesem Datensatz enthaltenen Fingerabdrücke werden mittels bekannter Verfahren in einen Parametervektor übergeführt. Diese Parametervektoren spannen einen Sub-Raum auf in dem nur mehr gültige Orientierungsfelder enthalten sind. Dies kann mittels der in der Literatur bekannten, sogenannten "subspace"- Methoden (wie PCA, K-PCA, ICA, etc.) erreicht werden.

Der Sub-Raum wird für die Bestimmung von Orientierungsfeldern in den zu erkennenden Fingerabdruckbildern verwendet. Dazu werden - wie bereits weiter oben beschrieben - zu den zu erkennenden Fingerabdruckbildern jeweils das lokale Orientierungsfeld der papillaren Linien bestimmt und danach zu jedem Orientierungsfeld eine parametrische Beschreibung erstellt.

Die Übereinstimmung der parametrischen Beschreibung mit dem Parameter Sub-Raum wird überprüft und gegebenenfalls eine Übereinstimmung durch Abwandlung von Parametern herbeigeführt. Diese Anpassung erfolgt auf der Grundlage und durch Einsatz bekannter Verfahren durch Ermittlung der nächstliegenden zulässigen Parameter des Sub-Raumes.

Aus den an den Sub-Raum angepassten Parametern wird ein Orientierungsfeld erzeugt.

Das neue Orientierungsfeld wird als Grundlage des Erkennungsvorganges einem Fingerprint-Matcher zugeführt.

Speziell für Fingerabdrücke mit qualitativ schlechten Bildregionen bzw. mit fehlenden Teilen bedeutet dies eine realistische Bestimmung des Orientierungsfeldes.

## Patentansprüche

1. Verfahren zur Ermittlung von Orientierungsfeldern der papillaren Linien eines Fingerabdruckbildes mit folgenden Schritten:
in einer Lernphase wird aus einem Satz hochwertiger Fingerabdruckbilder,
- jeweils das lokale Orientierungsfeld der papillaren Linien bestimmt,
- zu jedem Orientierungsfeld eine parametrische Beschreibung erstellt,
- ein Parameter Sub-Raum ermittelt, der nur gültige Orientierungsfelder enthält,
in einer oder mehreren Bestimmungsphasen wird danach aus dem zu bestimmenden Fingerabdruckbild
- jeweils das lokale Orientierungsfeld der papillaren Linien bestimmt,
- zu jedem Orientierungsfeld eine parametrische Beschreibung erstellt,
- die Übereinstimmung der parametrischen Beschreibung mit dem Parameter Sub-Raum überprüft und gegebenenfalls eine Übereinstimmung durch Abwandlung von Parametern herbeigeführt,
- aus den an den Sub-Raum angepassten Parametern wird ein realistisches Orientierungsfeld erzeugt.

2. Verfahren nach Anspruch 1, **dadurch gekennzeichnet, das** das realistische Orientierungsfeld als Grundlage für einen Fingerabdruckerkennungssvorgang einem Fingerprint-Matcher zugeführt wird.
